# EUROPEAN PATENT APPLICATION

(11) **EP 1 918 867 A2**
(43) Date of publication of application: **07.05.2008**
(21) Application number: 07254383.8
(22) Date of filing: 06.11.2007
(51) Int. Cl.: G06Q 10/00

(54) **Electronic purchasing of tickets**

(30) Priority: 06.11.2006 GB 0622064
(71) Applicant: Visa Europe Limited, London W2 6WH (GB)
(72) Inventor: Rifaat, Omar c/o Visa Europe Limited, London, W2 6WH (GB); Wilson, Dave c/o Visa Europe Limited, London, W2 6WH (GB)
(74) Representative: Pluckrose, Anthony William

(57) **Abstract**

An electronic payment means, such as a credit card with an embedded "smart card" chip, is used to effect payment for a ticket and to store ticket data. The memory of the chip includes a plurality of empty, generic data stores for storing the ticket data in a structure defined by the ticket issuer. Consequently, the electronic payment means may be used to purchase tickets from any of a number of different ticket issuers who may use different ticket data structures.

## Description

The present invention relates to the electronic purchase of tickets, particularly tickets for use in a transport system, but also tickets for other purposes such as tickets to a venue.

Electronic payment cards such as credit and debit cards or pre-payment cards are a ubiquitous form of payment for goods and services around the world. The technology has developed from a simple magnetic stripe along the back of the card which is read by a machine to identify the payer to cards having microchips embedded within them. Such cards are often referred to as smart cards. The microchip in a smart electronic payment card has sufficient storage and processing capabilities to enable more complex read/write operations than was possible with magnetic strip cards. The microchip may be powered up when it is inserted into a suitable reader or may be a contactless microchip that merely needs to be held near to a reader and is powered by inductive or capacitative coupling techniques. As contactless technology has developed and gained wider acceptance, microchips have been inserted into other devices such as key fobs or key rings and mobile phones. Cards, phones, and key fobs equipped with a suitable microchip or processor are all examples of different electronic payment means.

Despite these advances, electronic payment means still find only limited use within the transport industry. Passengers can typically purchase a ticket at a counter or automated machine using a credit card, but still require a separate paper ticket to travel. Some transport system operators give passengers the option of using a pre-paid card having a low-cost, limited use microchip or a Radio Frequency ID tag (RFID) contained within it. The microchip or RFID stores the pre-paid money amount and this amount is reduced as it is used by the passenger but may be topped up as the passenger wishes. Due to the limited processing capabilities of these low cost microchips, such cards must be pre-programmed with specific ticket structures and ticketing applications and typically work only with one transport system operator or within a particular city or region. These cards therefore do not have the same flexibility as a widely recognised and accepted electronic payment means such as the Visa credit card. Consequently, while such systems are popular with passengers who travel regularly with a single transport system operator, they are not of great use to intermittent travellers or tourists.

GB-A-2,333,630 describes a smart card programmed with a number of different applications for identifying the cardholder, for effecting payment and for enabling the purchase of travel related products such as airline tickets. An airline application includes a specific storage structure on the smart card to store an electronic ticket and boarding data. The smart card is programmed to operate only with specific partnering organisations, such as different airlines, with each partnering organisation creating their own tailor-made file structures that are stored on the card. This removes the flexibility of electronic payment means such as credit cards, since the cardholder would have to specify, when obtaining their smart card, which transport system operator(s) they wished to use so that the necessary applications and data structures could be put onto the card. Additionally, as new partnering organisations specify their own file structures and requirements, replacement cards would need to be sent to cardholders.

What is needed is an electronic payment means that can be used within any suitably equipped transport system.

### SUMMARY

Transport system operators currently use a wide variety of ticketing schemes. These schemes are largely bespoke to each operator which represents a significant problem if any provider of electronic payment means such as credit or debit cards wishes to introduce a payment solution that can be widely adopted by the transport sector.

Various initiatives are currently being undertaken by European standardisation bodies to define a common ticketing application framework, however it may be some years before this work is complete. This also means that the whole transport ticketing industry will be subject to some significant change over the coming years as these new standards are adopted and implemented.

A generic solution is necessary which works for the majority of operators and is robust enough to represent a long term solution. The solution provided by embodiments of the present invention is to provide, within a smart card processor, a 'container' for the transport system operators to store their products (tickets). This provides a simple approach for credit or debit card issuers, and allow deployment of a solution before the standardisation process is completed. Data structures currently used by limited use disposable media represent the most suitable, and widely used, 'container' technology to deploy.

Embodiments of the present invention provide a generic data store or structure together with two additional commands within the normal payment application of the electronic payment means stored on the processor. These commands allow tickets to be written to, and read from, the card in addition to effecting payment for the ticket. Another embodiment supports anti-tear functionality, allowing the commitment of a change to a ticket to be linked to the completion of a payment transaction.

Accordingly, one aspect of the present invention provides a system comprising: a processor of an electronic payment means having a memory; and a read/write device in communication with the processor and arranged to read a ticket from or write a ticket to the memory of the processor and to effect payment for the ticket by the processor; wherein the memory contains a data store configured to store the ticket in a ticket structure defined by the read/write device.

The payment means may be a card, typically a plastic card, supporting the processor or may be any other object suitable for supporting the processor such as a key fob or mobile phone.

The processor is typically a processor of the type normally found in "smart" credit cards and other electronic payment means as described above. Embodiments of the present invention are advantageous in that the memory of the processor is not pre-set with a specialised data structure for storing a ticket, but rather contains one or more identically configured or arranged data stores to which the read/write device can write a ticket in a structure defined by the read/write device or read a previously stored ticket. Consequently, an electronic payment means embodying the present invention can be used with any of a number of different read/write devices that have been programmed to write a ticket to one of the generic data stores in the processor using their own ticket structure.

Payment for the ticket may be effected when the ticket is first written to the memory, such as on entrance to a transportation network or to a venue. Alternatively, or in addition, payment may be effected when a previously stored ticket is read from the memory. This may be useful in a transportation network when a traveller is leaving the network and the read/write device makes a charge based upon a distance travelled. Alternatively, it may be useful where a charge is made based upon an amount of time between writing the ticket and subsequently reading the ticket, such as on exit from a venue or transportation network.

In another aspect, the present invention provides a processor of an electronic payment means for purchasing a ticket, the processor comprising: a payment application for effecting payment for purchasing a ticket; a memory for storing the ticket using a ticket structure defined by a read/write device. Advantageously, the memory is not pre-set with a specific data structure for storing data describing the ticket which the read/write device must use, although the memory will typically have a limited size in terms of a certain number of bytes of memory and may include pre-defined counters, flags and other features to assist in completing the transaction.

Preferably, the memory is capable of storing a ticket using a ticket structure defined by any of a plurality of different read/write devices. In this way, the electronic payment means may be used with any read/write device that has been programmed to write ticket data to the memory or to read that ticket data from the memory. Read/write devices may be placed at an entry and/or exit gate to a transport system, on a bus or other non-gated transport means, or at the entry and/or exit to a ticketed venue such as a theatre, for example.

Preferably, the memory includes a plurality of identically configured or arranged data stores, each data store capable of storing a ticket using a ticket structure defined by any of a plurality of different read/write devices. In this way, more than one ticket can be stored on the processor at any one time, such as a train ticket to a particular city, a ticket for using the local transport system within that city and a ticket to go to a theatre in the city.

Preferably, storage of the ticket in the memory is finalised only once payment has been effected and payment is only effected once a ticket has been stored in the memory. In this way, if a ticket purchasing transaction is interrupted for any reason, the processor will not have stored a valid ticket in the memory and payment will not have been effected. The transaction can then be completed at a later time. One preferred way of ensuring such "anti-tearing" functionality is to provide the payment application on the processor with logic for: setting a ticket flag in the processor when a ticket is stored in the memory; setting a payment flag in the processor when payment has been effected; checking the payment flag and the ticket flag; and either confirming a completed transaction if both flags have been set; or cancelling a transaction if only one or neither flag has been set.

Preferably, the electronic payment means is any of a credit device, a debit device or pre-payment device. Thus, either credit payments, debit payments of deductions from a pre-paid purse stored on the device may be used when purchasing a ticket.

In another aspect, the present invention provides a read/write device for reading/writing to a processor of an electronic payment means, comprising: logic for reading a ticket from or writing a ticket to a memory of the processor using a ticket structure defined by the read/write device; and logic for effecting a payment by the electronic payment means for the ticket. The read/write device of this aspect of the invention is advantageous since it defines the ticket structure that is written to the memory and therefore does not require there to be a pre-defined ticket structure available on the card. The read/write device can therefore operate with all electronic payment means having a generic data store made available within the memory of the processor.

Preferably, the read/write device is provided with logic for writing a ticket to an unused data store of a plurality of identically arranged data stores within the memory of the processor. Accordingly, if the memory of the processor has room for several tickets, the read/write device will not over-write any existing, valid tickets.

Preferably, the read/write device is provided with logic for deleting a used ticket from the memory. In this way, a user may present their electronic payment means at an exit gate to a transport system, or on disembarking a bus, or on leaving the theatre to have the used ticket removed from the processor to ensure that there is free space for when they wish to purchase another ticket. Payment may also be effected at this stage. Alternatively, if the user goes to purchase a new ticket and the read/write device ascertains that there is a used ticket stored in the memory, the logic may delete that ticket to create room for the new ticket, or over-write the used ticket with the new ticket.

Preferably, the read/write device is provided with logic for providing an access signal once the ticket is read/written and payment effected. The access signal may be to open an entry gate to a transport system or to a signalling device to signal to the user or a ticket seller that the transaction has been completed, such as by flashing a light and/or providing an audible indication.

In another aspect, the present invention provides a method of purchasing a ticket with an electronic payment means, comprising: reading a ticket from or writing a ticket to a processor of an electronic payment means using a ticket structure defined by the read/write device; and effecting payment for the ticket with the electronic payment means. Advantages and preferred features of this aspect of the invention will be clear from the above discussion of the other aspects of the invention.

Another aspect of the present invention provides a ticketing system comprising: a first read/write device for writing a ticket to a memory of a processor of an electronic payment means using a ticket structure defined by the read/write device without a ticket structure being pre-defined within the memory; a second read/write device for reading the ticket from the memory; and logic on one or both of the first read/write device or the second read/write device for effecting a payment by the electronic payment means for the ticket.

This aspect of the present invention permits a charge for the ticket to be levied when the ticket is written to the electronic payment means, when the ticket is subsequently read from the electronic payment means, or both. For example, a fare may be charged on leaving a transportation network or an additional charge levied if the user has travelled more than a certain distance or been in the system for more than a certain time. Time based charges may also be made, such a length of time spent at a venue.

### DETAILED DESCRIPTION

Preferred embodiments of the present invention will now be described by way of an example only and with reference to the accompanying drawing, in which:

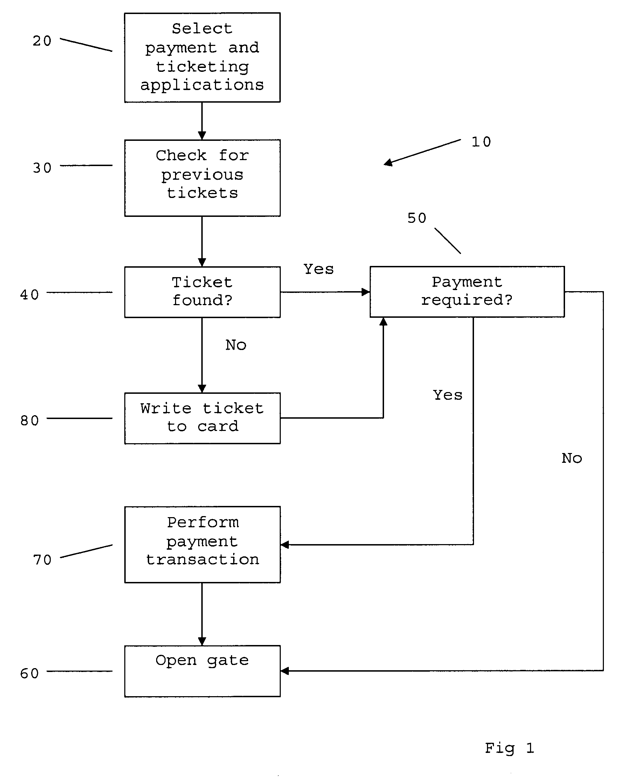

Figure 1 illustrates a simplified transaction flow for a credit card payment at the gate of a transport system.

In the following description of the preferred embodiments of the invention, cards or credit cards will be referred to as a suitable example of an electronic payment means. However, it will be understood that any suitable form of electronic payment means, such as those described above, may be used. The present invention will also be discussed in connection with its application to a transport system. However, it will be understood that it may be used in any suitable system when tickets are purchased by a user with an electronic payment means.

### 1. INTRODUCTION

As part of a cost reduction exercise and in order to reduce the use of paper tickets, many transport system operators would like to take payment by credit card or other electronic payment means directly at the transit gate or validator of their transport system. The goal is that anyone with a suitable card could use that card to pay for travel without having to visit a ticket machine or ticket office. Such a card would not be a direct replacement for existing ticketing schemes such as season tickets or the "Oyster" card used by Transport for London, which are targeted at frequent travellers, but is seen as an ideal solution for the occasional traveller or tourist.

For such a electronic payment card scheme to be viable, it would have to be no slower than the paper tickets with magnetic encoding systems that are often used by many transport system operators.

Updating the gates to accept a credit card payment is not sufficient since a transport system operator would typically require the ability to securely store ticket details on the card to allow exit from the system and ticket inspections on route. The solution will also need to cope with a range of ticket types, such as flat fares and distance based fares. Embodiments of the present invention therefore provide the ability to write ticket information back to the card. In addition, to maintain the flexibility inherent in credit card payments, embodiments of the present invention are generic and not limited to the requirements of any one transport system operator.

In order for this solution to be successful, it will be necessary for changes to be made to both the payment applications stored on the credit card and to the appropriate parts of transport system, such as entry gates or fare collection points. However, the solution of the present invention is simple for both the card issuer and the transport system operator.

### 2 REQUIREMENTS FOR USE

The requirements for a suitable solution include the following high level requirements:
1. Transaction speed shall be no slower than current magnetic stripe tickets.
2. When using credit card payment products at a gate, single journey tickets shall be supported.
3. It is desirable that other ticket types and advanced ticketing features such as period passes, fare capping and interchange fares should also be supported if required by the transport operator.
4. The transaction shall be able to work in offline environments.
5. Modifications to default credit card payment applications shall be minimal and simple for card issuers to personalise.
6. The solution to enable transit ticketing on credit cards shall require minimal ongoing support (e.g. minimal additional card management, minimal impact on customer servicing).
7. The solution shall be generic and usable by as many transport schemes around the world as possible.
8. It is desirable that the same solution should be useable by other industry sectors, e.g. event ticketing and road user charging on, for example, toll-roads or congestion zones.
9. The solution and application changes should not add any cost to the issuance of the credit card.
10. It is believed that for most issuers, only very limited memory space (hundreds of bytes) will be available on card to store ticket information. The solution shall minimise the amount of card memory required.
11. It is believed that transit operators will not wish to make significant changes to their systems in order to introduce credit card payment directly at a transit gate or validator. The solution should minimise any such changes.

### 3 HIGH LEVEL IMPLEMENTATION

As smart card systems have developed, a new range of smart cards have been introduced targeted at cost sensitive limited use applications. Although few schemes have currently launched products based on this technology, there is a lot of interest from transport operators and event ticketing organisations. Many groups have developed potential products for release on this media type. See appendix A for further background information of this media type.

Limited used disposable media typically provides very limited resources in order to minimise device costs. No cryptographic capabilities are normally included, and memory in limited to approximately 64 bytes (48 of which are normally user definable). The necessary applications and data structures for interfacing with the desired read/write devices are also typically pre-programmed.

It is relatively straightforward to implement the data structure (full device emulation not being required) of a limited use disposable memory device within a credit card payment application. Such a data structure would be immediately recognisable by most transport operators, many of whom have already developed products (tickets) for this type of data structure.

Also due to the very limited memory requirements, it is possible to include multiple instances of the data structure on the payment card allowing simultaneous use by a number of merchants/transport operators.

### 3.1 Benefits

This solution provides credit card issuers and transport operators with the following benefits:
1. Provides the transport operator with the simple operating environment with which they already have experience / familiarly.
2. Due to the limited memory availability, such a solution provides fast operation.
3. A credit card issuer does not need to personalise the data structures when issuing a payment card. The data structures are personalised dynamically when used.
4. This solution provides flexibility, and allows the use of credit card payment in a large number of transport schemes around the world.
5. The credit card issuer does not need to become involved in the exact definition of data that a transport operator needs to store and retrieve from the card. Instead, the credit card issuer can rely on the work already being undertaken by transport operators.
6. The solution provides the same level of service as currently obtained at a ticket machine, but with the ticket selection process replaced by fully automatic logic. Either the equivalent data as normally written to a magnetic stripe ticket or a dedicated low cost disposable smart card is written to the credit card on completion of the transaction.
7. A credit card issuer can support a number of such data structures, allowing multiple transport schemes or other services to be supported simultaneously.

### 4 CHANGES TO DEFAULT PAYMENT APPLICATIONS

In order to implement the proposed solution, the default payment applications that exist on electronic payment card need to be developed to support extra functionality. This extra functionality is summarised as follows:
1. Introduce the ability to store and retrieve ticket related data;
2. Provide additional anti-tear facilities so that the payment and transport transactions always occur as an atomic operation;
3. Protect transport data from being accidentally overwritten while still in use;
4. Perform a complete transaction (payment and transport elements) in a timely manner;
5. Prevent transport data space from becoming permanently "full" and protect from denial of service attacks

### 4.1 Implementing the transport data store

Transport or ticketing data is stored on the processor of the electronic payment means in a data structure equivalent to that provided by limited use disposable media. The data structure supports some or all of the following data types:

### 1. User Memory

This is memory the transport operator uses to store general ticket data. It is divided into a number of small blocks that can be flagged as read only after the ticket is written to the card to prevent modification during normal use.

### 2. ID

This is a unique identification number equivalent to that used for limited use media products. It includes the device's own unique number provided during an anti-collision process (where supported) and is used to bind a ticket directly to the media it was originally written to.

### 3. One Time Programmable (OTP) Memory

This is an area of memory where each individual bit can only be written (i.e. its state changed) once. It is commonly used for flags where, as the ticket is used, a bit (flag) can be permanently set to show that that an event has occurred.

### 4. Counters

Once set with an initial value, these provide a one way counter that preferably cannot be reset. Typically this is used to implement a non re-loadable pre-pay balance.

The full specification for the data structure need not be an exact emulation of any one of the current limited use disposable media types currently on the market. Additionally, on limited use media, OTP memory is one time programmable over all time and user memory set to read only is read only for ever. With embodiments of the present invention, this functionality is emulated on a per ticket basis such that, for a given ticket the memory can be "write only" and OTP will be emulated but when the ticket is erased or deleted the memory will be freed up and the OTP reset for the next ticket. Counters may also be fixed on a per ticket basis, as desired, although one counter within the card is preferably permanent and changed on every ticket write to protect against a ticket being read from a card and written back.

The preferred data structure of the present invention includes the following minimum features which are similar to current standards in limited use disposable smart cards:
1. 48 bytes of user memory organised as 12 * 4 byte blocks
2. 7 byte ID (although an 11 byte ID may also be useful under some circumstances)
3. 64 bit OTP memory (organised as 2 * 32 bit blocks)
4. Two 32 bit counters (to assist with the migration of data mappings designed for certain limited use smart cards)

Processors used in credit card platforms typically have greater capabilities than limited use smart cards. As such, additional functionality is preferably included to improve performance and security. One such enhancement is allowing ticketing operators to set their own keys for read / write / delete access to their data structure. This prevents unauthorised access and provides an override function to erase the structure if the card became full and the cardholder no longer requires the operator's ticket.

Figure 1 illustrates a simplified transaction flow 10 for a credit card payment at the gate of a transport system.

When a passenger inserts their credit card into the reader at a gate, or holds their contactless card near to the reader, the gate first identifies that it is a credit card that has been presented and not one of the operator's own tickets. The payment and ticketing application on the credit card is then selected 20. Any tickets held within the generic data stores are read 30 to determine if the card already holds a valid ticket for the journey and the passenger already has authority to travel. Since each data store is small, very little data needs to be retrieved from the credit card, ensuring that this process is sufficiently quick.

If a valid ticket is found 40 and no payment is required 50, then the transit gate will open 60. A used ticket is preferably removed from the card if, for example, the passenger is exiting the system.

If a valid ticket is found 40 and payment is required 50, such as if the ticket was a time based or distance based ticket, a payment transaction will be initiated for the necessary amount 70. This amount may be based upon, for example, the time elapsed between the writing of the ticket and the reading of the ticket or upon the location where the ticket was written and the location where the ticket is being read. The payment transaction is preferably a normal credit card transaction which obtains payment for the ticket. Once payment is effected a used ticket is preferably removed from the card and the gate opens 60.

If no valid ticket is found, a ticket will be written to the card 80. If payment is required at this stage, the ticket is flagged inactive or not committed to memory until the associated payment transaction has been completed 70. On completion of the payment transaction, the ticket will be activated automatically (or committed to memory) by the payment application on the card and the gate opens 60.

This flow 10 makes use of two additional commands implemented within the credit card payment application:

### 1. READ TICKET

This command is used to read any relevant tickets already stored on the card

### 2. WRITE TICKET

This command is used to write a new ticket or amend / delete and existing ticket stored in the card.

### 4.2 Implementing anti-tear functionality

Within a transport environment, particularly when using a contactless credit card, anti-tear is a very important aspect as people rush past the gate or ticket validator. Frequently passengers do not allow enough time for the transaction to complete and remove their card from the reader or the reader's field too early. If this was not carefully designed for, multiple payments could be taken for the same transaction, or the transaction undertaken without payment being collected.

Preferably, anti-tear functionality is included as an application on the processor of the electronic payment card. When a ticket is written to the data structure that is dependant on a credit card transaction also being completed, this is flagged to the card. When a payment transaction is then completed within the same session, the application commits the changes to the data structure. This additional functionality in the credit card application potentially decreases transactions times as the reader of the transport operator would not need to undertake anti-tear functionality.

More specifically, an anti-tear application on the processor of the credit card sets two flags: a ticket flag that indicates that a ticket has been written to the card and a payment flag that indicates that payment has been effected. At the end of a transaction, the application checks that both flags have been correctly set and updates the data structure. If, in contrast, a transaction is interrupted, then only one (or neither) of the flags will have been set. Each time the credit card processor is powered up, it first checks existing flags to see if a previous transaction has been interrupted. If it finds that only a single flag has been written in a previous transaction, the entire previous transaction is cancelled.

### 4.3 Implementing controls on who can use the data stores

Since the card may be used with many different transport operators, one operator may, under some circumstances, wish to clear data stored by another. Functionality to permit this while also protecting the integrity of each operator's data is preferably implemented in one or all of the following ways:
1. Issuers provide enough on card resources so that multiple data structures can be supported, minimising such requirements;
2. All data structures when defined are given a clear expiry point, after which they can be deleted to free up space for new data structures;
3. The cardholder is given the ability to manage the allocation of data structures themselves, such as through an Internet portal.
4. A new issuer script command is implemented to allow the card issuer to erase data structures held by the card if a problem occurs.
5. A rule is defined that is enforced by the application limiting any operator to only storing one data structure or a pre-determined number of data structures on the card at a time.

In addition to the management of data structures from genuine service providers, functionality to prevent unauthorised use of data structures may also be included. This helps to prevent denial of service attacks on the card, for example, if unauthorised service providers fill the card with unwanted data, thus preventing its use by authorised service providers.

### 4.4 Minimising Transaction time

To minimise transaction time, the following, in order of importance, are limited:
1. The number of Application Protocol Data United (APDUs) exchanged during a transaction;
2. The amount of processing the card application must perform in order to respond to each APDU;
3. The amount of data sent within each APDU.

On many processor platforms there is a significant overhead associated with each APDU processed. Minimising the number of APDUs required to complete a transaction is therefore the most effective way to reduce transaction times.

### 4.5 Platform and Transaction Security

Current limited use disposable media does not support any on card encryption functionality which significantly limits the security that can be implemented on the media. Most transport operators therefore rely on the followings approaches:
1. Relying on the limited availability of the media to the general public;
2. Storing a 'cryptogam' with the ticket data that is calculated over the data stored and the media's own ID. This prevents a ticket being copied from one card to another.
3. Using the OTP and block access control functions, limit the ability of an attacker to reverse a transaction or reset the contents on the media;
4. Only using the media for low value transactions;
5. Using back office offline checks to determine if any significant fraud is occurring and hot listing functionality to block compromised media.

Embodiments of the present invention improve security by generating a card ID and/or ticket counter. Since data structures can be erased and created dynamically, it might otherwise be possible to copy a previous ticket image back to a card after the original ticket has been used. Changing the ID of the card within the data structure image helps to prevent such attacks.

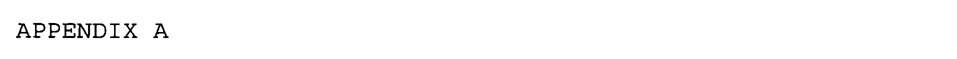

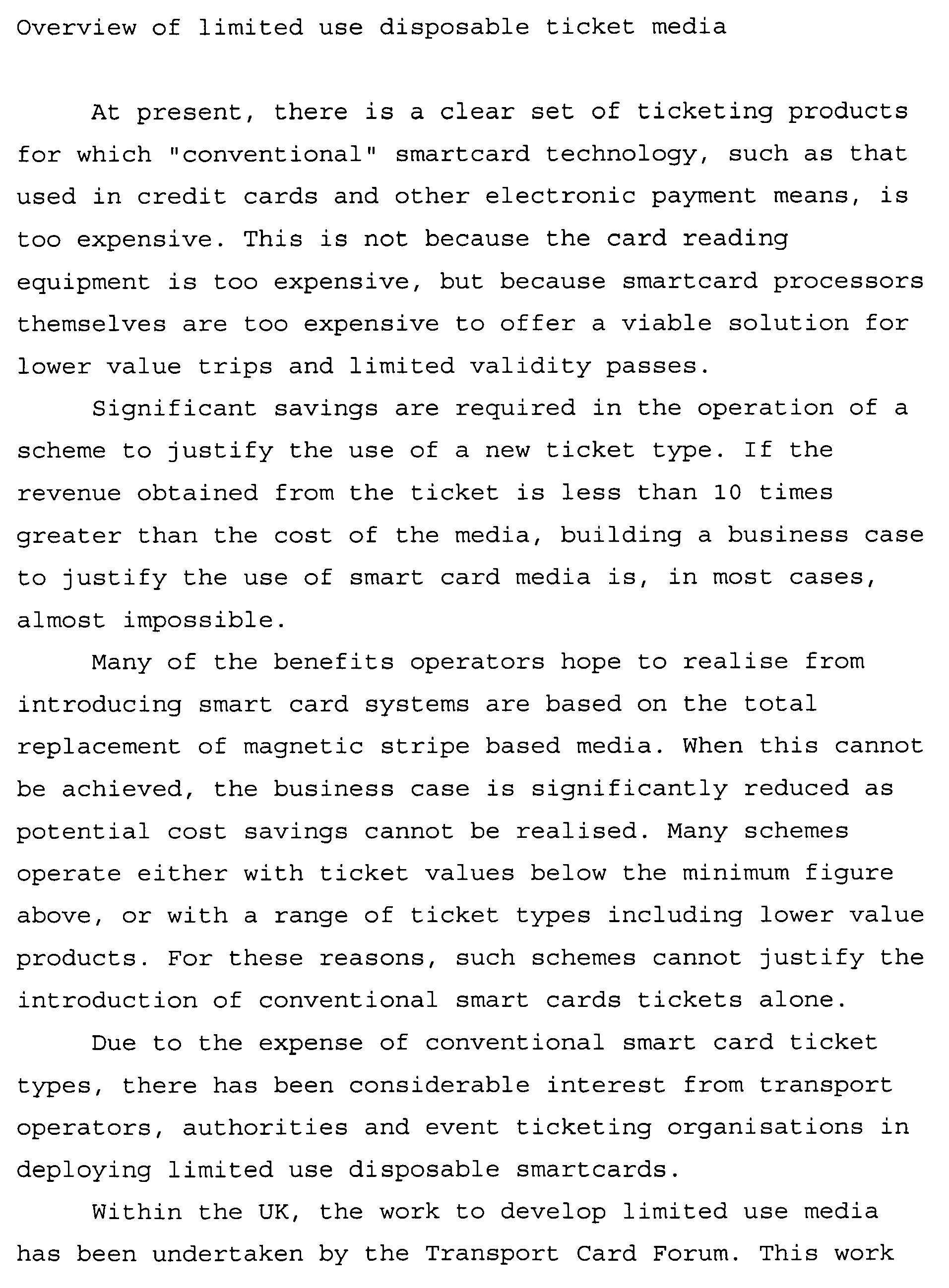

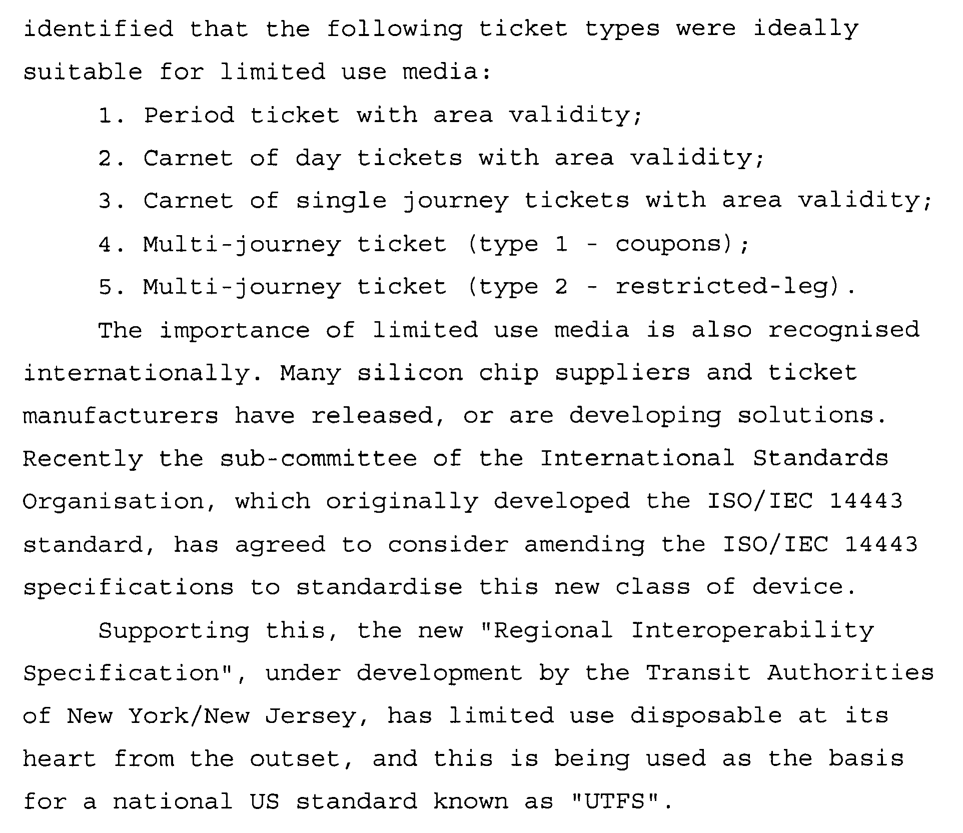

## Claims

1. A processor of an electronic payment means comprising:
a payment application for effecting payment for a ticket;
a memory for storing the ticket using a ticket structure defined by a processor read/write device without a ticket structure being pre-defined within the memory.

2. The processor of claim 1 wherein the memory is capable of storing a ticket using any of a plurality of different ticket structures defined by any of a plurality of different read/write devices.

3. The processor of claim 1 or claim 2 wherein the memory includes a plurality of identically configured data stores, each data store capable of storing a ticket using a ticket structure defined by any of a plurality of different read/write devices.

4. The processor of claim 1, 2 or 3 wherein storage of the ticket in the memory is finalised only once payment has been effected.

5. The processor of claim 1, 2 or 3 wherein the payment application further includes logic for:
setting a ticket flag in the processor when a ticket is stored in the memory;
setting a payment flag in the processor when payment has been effected;
checking the payment flag and the ticket flag; and
either confirming a completed transaction if both flags have been set; or
cancelling a transaction if only one or neither flag has been set.

6. The processor of any preceding claim wherein the ticket is for use in a transport system.

7. The processor of any preceding claim wherein the electronic payment means is any of a credit device, a debit device or pre-payment device.

8. A read/write device for reading/writing to a processor of an electronic payment means, comprising:
logic for writing a ticket to a memory of the processor using a ticket structure defined by the read/write device without a ticket structure being pre-defined within the memory;
logic for effecting a payment by the electronic payment means for the ticket.

9. The read/write device of claim 8 further comprising:
logic for writing a ticket to an unused data store of a plurality of identically arranged data stores within the memory of the processor.

10. The read/write device of claim 8 or claim 9 further comprising:
logic for deleting a used ticket from the memory.

11. The read/write device of any of claims 8 to 10 further comprising:
logic for providing an access signal once the ticket is written and payment effected.

12. The read/write device of claim 11 further comprising a gate in communication with the read/write device, the gate adapted to receive the access signal from the read/write device and to open on receiving the access signal.

13. A system comprising the processor of any of claims 1 to 7 in communication with the read/write device of any of claims 8 to 12.

14. A method of purchasing a ticket, comprising:
writing a ticket to a processor of an electronic payment means using a ticket structure defined by a processor read/write device;
effecting payment for the ticket with the electronic payment means.

15. A system comprising:
a processor of an electronic payment means having a memory; and
a read/write device in communication with the processor and arranged to write a ticket to the memory of the processor and to effect payment for the ticket by the processor;
wherein the memory contains an empty data store adapted to store a ticket in a ticket structure defined by the read/write device.

16. A processor of an electronic payments means for use in the system of claim 15.

17. A read/write device for use in the system of claim 15.

18. A ticketing system comprising:
a first read/write device for writing a ticket to a memory of a processor of an electronic payment means using a ticket structure defined by the read/write device without a ticket structure being pre-defined within the memory;
a second read/write device for reading the ticket from the memory; and
logic on one or both of the first read/write device or the second read/write device for effecting a payment by the electronic payment means for the ticket.

19. The system of claim 18 wherein payment is effected by the second read/write device based upon a distance between the first read/write device and the second read/write device.

20. The system of claim 18 wherein payment is effected by the second read/write device based upon a location of the first read/write device and a location of the second read/write device.

21. The system of claim 19 wherein payment is effected by the second read/write device based upon an elapsed time between the writing of the ticket by the first read/write device and the reading of the ticket by the second read/write device.

22. A method of purchasing tickets, comprising:
writing a ticket to a processor of an electronic payment means using a ticket structure defined by a first read/write device;
reading the ticket with a second read/write device;
effecting payment for the ticket with the electronic payment means by one or both of the first read/write device and the second read/write device.

23. A computer program which, when executed, performs the method of either of claims 14 or 22.
